# EUROPÄISCHE PATENTSCHRIFT

(11) **EP 3 159 305 B1**
(45) Veröffentlichungstag und Bekanntmachung des Hinweises auf die Patenterteilung: **12.06.2019**
(21) Anmeldenummer: 15190727.6
(22) Anmeldetag: 21.10.2015
(51) Int. Cl.: C01B 13/11

(54) **OZONERZEUGUNG MIT DIREKT GEKÜHLTEN PLASMAKANÄLEN**
GENERATING OZONE WITH DIRECT COOLED PLASMA CHANNELS
PRODUCTION D'OZONE À L'AIDE DE CANAUX DE PLASMA REFROIDIS DIRECTEMENT

(43) Veröffentlichungstag der Anmeldung: 26.04.2017
(73) Patentinhaber: Xylem IP Management S.à.r.l., 1259 Senningerberg (LU)
(72) Erfinder: FIEKENS, Ralf, 33758 Schlossholte-Stukenbrock (DE); FIETZEK, Reiner, 32049 Herford (DE); SALVERMOSER, Dr. Manfred, 32049 Herford (DE); BRÜGGEMANN, Nicole, 32130 Enger (DE)
(74) Vertreter: Lenzing Gerber Stute

(56) Entgegenhaltungen:
- EP-A1- 0 900 591
- EP-A2- 0 369 366
- EP-B1- 0 789 666
- WO-A1-93/16001
- JP-A- S63 291 804

## Beschreibung

Die vorliegende Erfindung betrifft einen Ozongenerator mit den Merkmalen des Oberbegriffs des Anspruchs 1 und die Verwendung eines elektrisch nichtleitenden Gebildes gemäß Anspruch 9.

Der Wirkungsgrad von Ozonerzeugern ist stark abhängig von der Temperatur im Entladungsraum. Zum einen liegt das daran, dass die Ozonbildungsreaktion bei niedrigen Temperaturen besser abläuft und zum anderen daran, dass die Kinetik des Ozonzerstörungsmechanismus exponentiell mit der Temperatur zunimmt. Eine effektive Kühlung des Gasraumes ist somit zwingend notwendig für eine effiziente Ozongenerierung. Aus dem Stand der Technik sind ein- oder zweiseitig mit Wasser gekühlte Ozongeneratoren bekannt. Deren limitierender Faktor beim Wärmetransport ist die Wärmeleitfähigkeit im Entladungsspalt. Im Vergleich zu dem Gas, das den Entladungsspalt durchströmt, leitet das Elektrodenmaterial, beispielsweise Edelstahl, die Wärme um zwei bis drei Größenordnungen besser.

In der US 5,855,856 sind gleich mehrere Maßnahmen zur Kühlung des Ozongenerators verwirklicht. Der Röhrenozonerzeuger besitzt sowohl eine Innenals auch eine Außenkühlung. Innerhalb dieser Kühlräume sind wärmeabsorbierende Objekte in Form von Spänen oder Fasern angeordnet. Diese Objekte können aus Werkstoffen mit hohen Wärmeleitfähigkeiten und nichtkorrosiven Eigenschaften gefertigt sein. Das Gas wird dem Ozonerzeuger tangential zugeführt, um eine spiralförmige Strömung zu hervorzurufen, was zusätzlich die Innenelektrode kühlen soll. Darüber hinaus wird ein Teil des Produktgases abgezogen, gekühlt und dem Gas zugeführt. Die ganze Konstruktion ist sehr aufwendig, verbessert aber nicht den limitierenden Schritt des Wärmetransportes aus dem Entladungsspalt.

Die Schrift EP 0 369 366 A3 beschreibt eine Anordnung, bei der eine Vielzahl von wärmeleitenden Feststoffen im Reaktionsraum angeordnet ist. Diese Feststoffe dienen dazu einen Wärmeausgleich zwischen Gebieten mit höherer Temperatur und niedriger Temperatur im Ozonreaktor zu schaffen. Dazu müssen sich diese Feststoffe untereinander berühren und Kontakt zum Dielektrikum oder einer Elektrode bzw. beiden Elektroden aufweisen.

Ein Werkstoffmix aus elektrisch leitendem und elektrisch nicht leitendem Material wird in der Patentschrift US 648,764 beschrieben. Perlen oder Platten der beiden Materialien sind wie auf einer Perlenschnur aneinander gereiht. Die Abmessungen der Perlen des elektrisch nichtleitenden Materials sind dabei größer, da eine verbesserte Ozonausbeute durch einen größeren Abstand zwischen dem elektrischem Leiter und dem dielektrischen Separator erreicht wird.

EP 0 900 591 A1 offenbart einen Entladungsreaktor zur Herstellung von Ozon aus O₂ wobei ein Dielektrikum und ein elektrisch nichtleitendes Blockmaterial mit Poren in einem Zwischenraum zwischen zwei Elektroden angeordnet sind.

EP 0 789 666 B1 offenbart eine Vorrichtung zur Erzeugung von Ozon aus sauerstoffhaltigen Gasen durch stille elektrische Entladung wobei der zwischen einer Elektrode und einem Dielektrikum gebildete Spalt durch eine elektrisch leitfähige und wärmeleitfähige, gasdurchlässige Anordnung ausgefüllt ist.

Das Einbringen von dielektrischen Materialien dient im Allgemeinen zum Einstellen der Spaltweite (Spacer), als Strömungsstörmaterial (Gasdurchmischung), oder zur Lenkung der Strömung.

Es ist Aufgabe der vorliegenden Erfindung, einen Ozongenerator anzugeben, der einen guten Wärmetransport im Entladungsspalt aufweist. Weiterhin ist es Aufgabe der Erfindung ein elektrisch nichtleitendes Gebilde zum Einsatz in einem von Gas durchströmten Raum eines Ozongenerators anzugeben, das die Wärme gut abtransportiert.

Der Begriff "Flächengebilde" ist aus der Textiltechnik bekannt (Englisch: woven or non-woven fabric). Als textiles Flächengebilde ist jedes flächige Gebilde zu bezeichnen, das aus textilen Rohstoffen nach einer Textiltechnologie hergestellt wird. Im Zusammenhang der vorliegenden Patentanmeldung wird dementsprechend unter einem Flächengebilde jedes plane, gekrümmte oder gewölbte flächige Gebilde verstanden, das nach einer Textiltechnologie hergestellt wird. Darunter fallen unter anderem Fadenverbundstoffe, wie Gewebe, Maschenstoffe, Geflechte und Netze, und Faserverbundstoffe, wie Vliesstoffe und Watten. Unter dem Begriff Gebilde ist hingegen jede Art von Flächengebilde und massivere Gebilde wie beispielsweise Gitter zu verstehen.

Die zuvor genannte Aufgabe wird von einem Ozongenerator mit den Merkmalen des Anspruchs 1 und einem elektrisch nichtleitendem Gebilde mit den Merkmalen des Anspruchs 10 gelöst.

Weil bei einem gattungsgemäßen Ozongenerator vorgesehen ist, dass das elektrisch nichtleitende Gebilde Poren aufweist, wobei die nominale Porengröße (x) 100 µm< x <1 mm ist, kann die in einer einzelnen Entladung frei werdende Wärme schnell und unmittelbar an das nichtleitende Gebilde abgegeben werden und so der temperaturinduzierte Ozonabbau verringert werden. Es ergibt sich ein verbesserter Wirkungsgrad des Ozongenerators.

Ein einfach zu fertigender Aufbau ergibt sich, wenn das elektrisch nichtleitende Gebilde ein Flächengebilde ist. Insbesondere kann das elektrisch nichtleitende Gebilde ein Gewebe oder Geflecht sein.

Die weitere Ableitung der Wärme wird verbessert, wenn das elektrisch nichtleitende Gebilde zumindest teilweise in flächiger Anlage mit dem wenigstens einen Dielektrikum steht.

Vorteilhaft weist das Gebilde eine die nominale Porengröße größer als 100 µm und kleiner als 1000 µm, insbesondere kleiner als 750 µm auf. Insbesondere ist dabei vorteilhaft die nominale Porengröße (x) kleiner als 500 µm und besonders bevorzugt kleiner als 250 µm.

Das elektrisch nichtleitende Gebilde wird bevorzugt aus Keramik und/oder Glas hergestellt.

Ein besonders guter Wirkungsgrad ergibt sich, wenn weiter die Hochspannungselektrode wenigstens teilweise aus einem metallischen Flächengebilde gebildet ist.

Die Aufgabe wird auch von einem gattungsgemäßen elektrisch nichtleitenden Gebilde gelöst, Poren aufweist, deren nominale Porengröße (x) 100 µm< x <1 mm ist. Dabei ist bevorzugt, wenn das elektrisch nichtleitende Gebilde ein Flächengebilde aus Glasfaser oder Keramikfaser ist.

Für einen besonders hohen Wirkungsgrad wird bevorzugt, dass die nominale Porengröße (x) 100 µm< x <250 µm ist, weil dann eine besonders effektive Wärmeableitung erfolgen kann.

Eine Ausführungsform der Erfindung wird anhand der Zeichnung näher beschrieben.

Es zeigen:
- Fig. 1:: eine Elektrodenanordnung eines Ein-Spalt-Ozongenerators;
- Fig. 2:: eine kombinierte Elektroden- und Flächengebildeanordnung; sowie
- Fig. 3:: ein nichtmetallisches Flächengebilde.

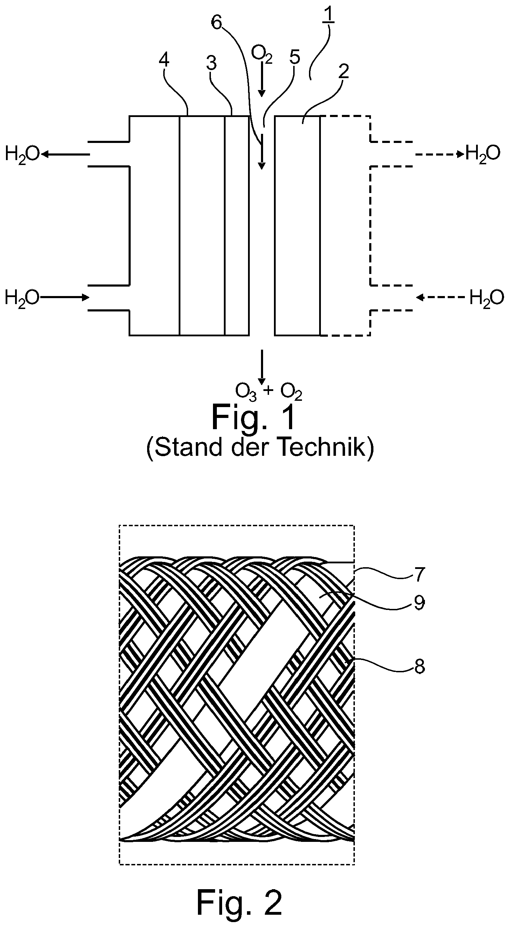

Figur 1 zeigt eine Elektrodenanordnung eines Ein-Spalt-Ozongenerators 1 in der Bauform eines Plattenozonerzeugers ohne ein in dem Spalt angeordnetes Flächengebilde in einem schematischen Querschnitt. Insoweit entspricht die Figur 1 dem Stand der Technik. Solche Ozongeneratoren 1 können je nach Anwendungsgebiet als Plattenozongenerator oder Rohrozongenerator ausgestaltet sein.

Plattenozonerzeuger weisen eine Hochspannungselektrode 2 und wenigstens eine Gegenelektrode 4 auf, die plattenförmig ausgestaltet sind. Die Elektroden 2, 4 begrenzen einen Zwischenraum 5, der von einem sauerstoffhaltigen Gas 6 durchströmt wird und in dem ein Dielektrikum 3 angeordnet ist. Herkömmlicherweise sind Plattenozonerzeuger ein- oder zweiseitig durch an den Außenseiten der Elektroden 2, 4 entlanggeführtes Kühlmedium gekühlt. Als Kühlmedien kommen Luft und Wasser zum Einsatz.

Rohrozongeneratoren werden herkömmlicherweise gruppiert in einem Ozonerzeuger eingesetzt. Die Ozongeneratoren sind dabei nach Art eines Rohrbündelwärmetauschers parallel zueinander zwischen zwei Rohrböden angeordnet. Rohrozongeneratoren weisen analog zu dem Plattenozonerzeuger eine rohrförmige Hochspannungselektrode 2, ein rohrförmiges Dielektrikum 3 und eine rohrförmige Gegenelektrode 4 auf. Die Anordnung ist rotationssymmetrisch. Die Hochspannungselektrode 2 und die Gegenelektrode 4 sind konzentrisch zueinander ausgerichtet. Sie begrenzen einen Zwischenraum 5, der von einem sauerstoffhaltigen Gas durchströmt wird und in dem das Dielektrikum 3 angeordnet ist. Die außenliegende Gegenelektrode 4 ist als Edelstahlrohr ausgebildet. Die bei der Ozonproduktion entstehende Abwärme wird durch Kühlwasser (in der Figur 1 mit H₂O bezeichnet) gekühlt, welches an der Außenseite der Gegenelektrode 4 entlang geführt wird. Dabei kann auch vorgesehen sein, den Generator 1 zweiseitig zu kühlen, indem Kühlwasser die Hochspannungselektrode 2 auch auf der Innenseite durchströmt.

Zur Ozonerzeugung wird zunächst molekularer Sauerstoff in atomaren Sauerstoff dissoziiert, der anschließend durch Reaktion mit einem Sauerstoffmolekül Ozon bildet. Der theoretische Wert von 1,47 eV zur Erzeugung von einem Ozonmolekül ist in der Praxis nicht zu erreichen. Aufgrund von Verlusten während des mehrstufigen Reaktionsablaufs liegt der Wirkungsgrad bei der Ozonerzeugung deutlich niedriger. Die Dissoziation des Sauerstoffmoleküls erfolgt zunächst über verschiedene Anregungszustände des Sauerstoffmoleküls. Beim Zerfall der angeregten Sauerstoffmoleküle oder bei der Ozonbildung wird Energie frei, die nicht für die weitere Dissoziation von Sauerstoffmolekülen zur Verfügung steht, sondern zur Aufheizung des Gases führt. Diese Vorgänge finden unmittelbar in den Mikroentladungen statt.

Erfindungsgemäß wird in den Gasstrom 6 eines Ozongenerators 1 (Platten- oder Rohrerzeuger) bzw. den Entladungsspalt ein in der Figur 2 in einem Ausführungsbeispiel dargestelltes elektrisch nichtleitendes Gebilde 7 eingebracht. Das elektrisch nichtleitende Gebilde 7 besteht aus einem gut wärmeleitenden und porösen Material. Die Porosität des elektrisch nichtleitenden Materials wird über die nominale Porengröße definiert, die der mittleren Porengröße (arithmetisches Mittel) entspricht. Die Porengröße ist dabei der Durchmesser der größten sphärischen Kugel, die die Pore passieren kann. Die nominale Porengröße des elektrisch nichtleitenden Materials ist an die Größe der Mikroentladungen im Entladungsspalt angepasst. Die Mikroentladungen weisen einen Durchmesser von etwa 100 µm auf. Die Porengröße des elektrisch nichtleidenden Materials beträgt daher bevorzugt zwischen 100 µm und 1 mm. Das elektrisch nichtleitende Gebilde 7 stellt somit eine direkte Wärmeankopplung an die Entladung und die angrenzenden kühlen Elektroden- und Dielektrikumsoberflächen da. Das Gebilde 7 steht in einer Vielzahl von Punkten bzw. zumindest teilweise flächig in Anlage mit dem Dielektrikum 3 und der Elektrode 2. Die Kontaktfläche ist dabei möglichst großflächig. Das elektrisch nichtleitende Material ist ozon- und korrosionsbeständig. Dabei ist es bevorzugt, wenn das Gebilde 7 ein Flächengebilde aus Glasfaser oder keramischer Faser 9 ist. Durch die Poren in dem Gebilde 7 kommt es zur direkten Wärmekopplung an die Mikroentladungen.

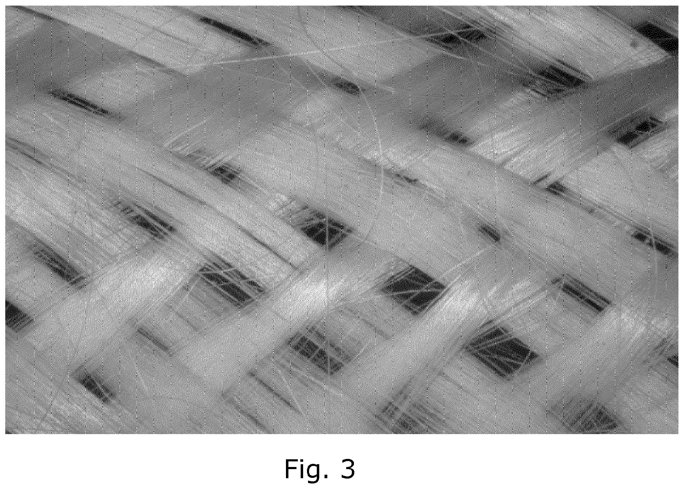

Ein solches bevorzugtes Gebilde 7 ist in der Figur 3 dargestellt, die eine mikroskopische Fotografie eines Gewebes aus Keramikfilamenten zeigt.

Alle beschriebenen Ausführungsformen finden sowohl bei Rohrozongeneratoren als auch bei Plattenozongeneratoren Anwendung. Besonders bevorzugt ist die Anordnung des erfindungsgemäßen Gebildes bei Mehrspaltsystemen, die längere Wärmeübertragungswege als Ein-Spalt-Ozongeneratoren aufweisen. Dabei kann das elektrisch nicht leitende Gebilde 7 im Außenspalt und/oder in wenigstens einem der Innenspalte vorgesehen sein.

Das Gebilde kann mit oder ohne Trägermaterialien in den Entladungsraum eingebracht werden. Die Trägermaterialien können beliebig ausgeführt sein, beispielsweise als Stab, Rohr, Platte usw.

Es kann vorgesehen sein, dass die Hochspannungselektrode aus einem metallischen Flächengebilde vollständig oder teilweise gebildet ist. Dazu ist in der Figur 2 veranschaulicht, dass eine Anzahl elektrischer Leiter 8 mit dem Gebilde aus der keramischen Faser 9 verwoben ist.

Der erfindungsgemäße Ozongenerator und mit ihm das elektrisch nichtleitende poröse Gebilde verbessern den Wirkungsgrad von Ozongeneratoren, indem der Wärmetransport im Entladungsspalt erhöht wird. Das elektrisch nichtleitende Gebilde weist neben den Poren, die direkt an die Mikroentladungen ankoppeln und die Wärme abtransportieren, eine möglichst große Kontaktfläche zu den angrenzenden Elektroden-und/oder Dielektrikumsoberflächen auf. So kann eine sehr gute Kühleffizienz auch bei größeren Spaltweiten erreicht werden. Die gute Wärmekopplung gestattet zudem Ozonerzeugungen bei hohen Temperaturen über 40 °C.

## Patentansprüche

1. Ozongenerator (1) mit einer Hochspannungselektrode (2) und wenigstens einer Gegenelektrode (4), die einen Zwischenraum (5) begrenzen, in dem wenigstens ein Dielektrikum (3) und ein elektrisch nichtleitendes Gebilde (7) angeordnet ist und der von einem Gasstrom (6) in Strömungsrichtung durchströmt wird, wobei die Hochspannungselektrode (2) und die wenigstens eine Gegenelektrode (4) mit einem Anschluss für eine elektrische Spannungsversorgung zur Erzeugung von stillen Entladungen versehen sind, und wobei das elektrisch nichtleitende Gebilde (7) Poren mit einer nominalen Porengröße (x) in einem Bereich von 100 µm< x <1 mm aufweist, **dadurch gekennzeichnet, dass** das elektrisch nichtleitende Gebilde ein Flächengebilde ist.

2. Ozongenerator (1) nach Anspruch 1, **dadurch gekennzeichnet, dass** elektrisch nichtleitende Gebilde (7) ein Gewebe oder Geflecht ist.

3. Ozongenerator (1) nach einem der vorhergehenden Ansprüche, **dadurch gekennzeichnet, dass** das elektrisch nichtleitende Gebilde (7) zumindest teilweise in flächiger Anlage mit dem wenigstens einen Dielektrikum (3) steht.

4. Ozongenerator (1) nach einem der vorhergehenden Ansprüche, **dadurch gekennzeichnet, dass** die nominale Porengröße (x) 100 µm< x <750 µm ist.

5. Ozongenerator (1) nach einem der vorhergehenden Ansprüche, **dadurch gekennzeichnet, dass** die nominale Porengröße (x) 100 µm< x <500 µm ist.

6. Ozongenerator (1) nach einem der vorhergehenden Ansprüche, **dadurch gekennzeichnet, dass** die nominale Porengröße (x) 100 µm< x <250 µm ist.

7. Ozongenerator (1) nach einem der vorhergehenden Ansprüche, **dadurch gekennzeichnet, dass** das elektrisch nichtleitende Gebilde (7) aus Keramik und/oder Glas hergestellt ist.

8. Ozongenerator (1) nach einem der vorhergehenden Ansprüche, **dadurch gekennzeichnet, dass** die Hochspannungselektrode (2) wenigstens teilweise aus einem metallischen Flächengebilde gebildet ist.

9. Verwendung eines elektrisch nichtleitenden Gebildes (7) in einem Gasstrom eines Ozongenerators (1), wobei das elektrisch nichtleitende Gebilde (7) Poren aufweist, deren nominale Porengröße (x) 100 µm< x <1 mm ist, **dadurch gekennzeichnet, dass** das elektrisch nichtleitende Gebilde (7) ein Flächengebilde aus Glasfaser oder Keramikfaser ist.

10. Verwendung nach Anspruch 9, **dadurch gekennzeichnet, dass** die nominale Porengröße (x) 100 µm< x <250 µm ist.

## Claims

1. Ozone generator (1) having a high voltage electrode (2) and at least one counter electrode (4), which delimits an intermediate space (5), in which at least one dielectric (3) and an electrically non-conductive structure (7) is arranged and through which a gas flow (6) passes in the current direction, wherein the high voltage electrode (2) and the at least one counter electrode (4) are provided with a connection for an electric voltage source to generate silent discharges and wherein the electrically non-conductive structure (7) has pores with a nominal pore size (x) in a range of 100 µm < x < 1 mm, **characterised in that** the electrically non-conductive structure is a fabric.

2. Ozone generator (1) according to claim 1, **characterised in that** the electrically non-conductive structure (7) is a woven fabric or mesh.

3. Ozone generator (1) according to any one of the preceding claims, **characterised in that** the electrically non-conductive structure (7) is at least partially in flat abutment with the at least one dielectric (3).

4. Ozone generator (1) according to any one of the preceding claims, **characterised in that** the nominal pore size (x) is 100 µm < x < 750 µm.

5. Ozone generator (1) according to any one of the preceding claims, **characterised in that** the nominal pore size (x) is 100 µm < x < 500 µm.

6. Ozone generator (1) according to any one of the preceding claims, **characterised in that** the nominal pore size (x) is 100 µm < x < 250 µm.

7. Ozone generator (1) according to any one of the preceding claims, **characterised in that** the electrically non-conductive structure (7) is manufactured from ceramic and/or glass.

8. Ozone generator (1) according to any one of the preceding claims, **characterised in that** the high voltage electrode (2) is formed at least partially from a metallic fabric.

9. Use of an electrically non-conductive structure (7) in a gas flow of an ozone generator (1), wherein the electrically non-conductive structure (7) has pores, whose nominal pore size (x) is 100 µm < x < 1 mm, **characterised in that** the electrically non-conductive structure (7) is a fabric made of glass fibre or ceramic fibre.

10. Use according to claim 9, **characterised in that** the nominal pore size (x) is 100 µm < x < 250 µm.

## Revendications

1. Générateur d'ozone (1) comprenant une électrode à haute tension (2) et au moins une contre-électrode (4), qui délimitent un espace intermédiaire (5) dans lequel sont disposés au moins un diélectrique (3) et un produit (7) non conducteur d'électricité et qui est traversé par un flux de gaz (2) dans le sens de l'écoulement, l'électrode à haute tension (2) et l'au moins une contre-électrode (4) étant pourvues d'une borne pour une alimentation en tension électrique en vue de générer des décharges silencieuses, et le produit (7) non conducteur d'électricité possédant des pores ayant une taille de pore (x) nominale dans une plage de 100 µm < x < 1 mm, **caractérisé en ce que** le produit non conducteur d'électricité est un tissu.

2. Générateur d'ozone (1) selon la revendication 1, **caractérisé en ce que** le produit (7) non conducteur d'électricité est un tissu tissé ou une tresse.

3. Générateur d'ozone (1) selon l'une des revendications précédentes, **caractérisé en ce que** le produit (7) non conducteur d'électricité se trouve au moins partiellement en appui à plat avec l'au moins un diélectrique (3).

4. Générateur d'ozone (1) selon l'une des revendications précédentes, **caractérisé en ce que** la taille de pore (x) nominale est 100 µm < x < 750 µm.

5. Générateur d'ozone (1) selon l'une des revendications précédentes, **caractérisé en ce que** la taille de pore (x) nominale est 100 µm < x < 500 µm.

6. Générateur d'ozone (1) selon l'une des revendications précédentes, **caractérisé en ce que** la taille de pore (x) nominale est 100 µm < x < 250 µm.

7. Générateur d'ozone (1) selon l'une des revendications précédentes, **caractérisé en ce que** le produit (7) non conducteur d'électricité est fabriqué en céramique et/ou en verre.

8. Générateur d'ozone (1) selon l'une des revendications précédentes, **caractérisé en ce que** l'électrode à haute tension (2) est formée au moins partiellement d'un tissu métallique.

9. Utilisation d'un produit (7) non conducteur d'électricité dans un flux de gaz d'un générateur d'ozone (1), le produit (7) non conducteur d'électricité possédant des pores dont la taille de pore (x) nominale est 100 µm < x < 1 mm **caractérisée en ce que** le produit (7) non conducteur d'électricité est un tissu en fibres de verre ou en fibres de céramique.

10. Utilisation selon la revendication 9, **caractérisée en ce que** la taille de pore (x) nominale est 100 µm < x < 250 µm.
